# EUROPEAN PATENT SPECIFICATION

(11) **EP 2 867 564 B1**
(45) Date of publication and mention of the grant of the patent: **09.08.2017**
(21) Application number: 13735159.9
(22) Date of filing: 26.06.2013
(51) Int. Cl.: F16K 1/12

(54) **AXIAL FLUID VALVES HAVING LINEAR ACTUATORS**
AXIALFLÜSSIGKEITSVENTILE MIT LINEAREN AKTUATOREN
VANNES AXIALES À FLUIDE AVEC ACTIONNEURS LINÉAIRES

(30) Priority: 27.06.2012 US 201213534981
(43) Date of publication of application: 06.05.2015
(73) Proprietor: Fisher Controls International LLC, Marshalltown, IA 50158 (US)
(72) Inventor: SCHADE, Ross A., Amesm, IA 50010 (US); JACKMAN, Phillip, Ames, IA 50014 (US); BOUWMAN, Christopher E., Marshalltown, Iowa 50158 (US); GUIEB-NEWTON, Sean M., West Lake Hills, TX 78746 (US); JOHNSON, Shane M., Ames, IA 50014 (US); COREY, Brian D., Sioux City, IA 51105 (US); MILLER, Justin W., Marshalltown, IA 50158 (US)
(74) Representative: Petraz, Gilberto Luigi
(86) International application number: PCT/US2013/047756
(87) International publication number: WO 2014/004601

(56) References cited:
- EP-A2- 2 336 610
- DE-A1- 3 404 219
- US-A1- 2010 187 462
- US-A1- 2011 198 523
- US-A1- 2012 138 836

## Description

### FIELD OF THE DISCLOSURE

The present disclosure relates generally to axial fluid valves and, more specifically, to axial fluid valves having linear actuators.

### BACKGROUND

Fluid control valves (e.g., sliding stem valves, globe valves, rotary valves, butterfly valves, ball valves, etc.) are used in process control systems to control the flow of process fluids and typically include an actuator (e.g., rotary actuator, linear actuator, etc.) to automate operation of the valve. Some of these fluid control valves, although effective in many applications, involve tradeoffs. For example, butterfly valves may be used to control large flow volumes in an efficient manner, but are only capable of modest accuracy, and the seals therein are often limited in life cycle and temperature range. Globe valves, on the other hand, typically provide extremely rigid trim and precise control, but often provide lower flow capacity for a given line size.

In-line or axial fluid control valves are an alternative to the above-mentioned fluid control valves. One benefit of axial valves is that they incorporate globe valve style trim and, thus, the advantages offered thereby. Specifically, in axial valves, this trim may be oriented relative to the fluid flow path to increase efficiency and reduce energy losses due to noise and turbulence. Some known axial valves include an actuator mounted to an exterior surface of the valve body and positioned so the output shaft (e.g., stem, spindle, etc.) of the actuator is oriented substantially perpendicular to the fluid flow path of the valve. The output shaft of the actuator is commonly connected to a flow control member (e.g., a plug) within the valve body via a rack-on-rack, rack-and-pinion or similar gear assembly. The actuator moves the flow control member within the valve body relative to a seat ring between an open position and a closed position to allow or prevent the flow of fluid through the valve.

In these known axial fluid valves, because the motion of the actuator stem is substantially perpendicular to the flow path of the fluid through the valve, the externally mounted actuator configuration may require additional space which, in practice, is often very limited. Furthermore, many known axial fluid valves exhibit problems with actuation and sealing (e.g., gaskets, packing, seal rings). These known axial fluid valves often utilize actuators and transmissions within the fluid flow path and, as a result, require a large number of seals and gaskets to protect the gears and other actuation components from pressurized process fluid. For example, some known axial valves use a complex gearbox to translate motion from an actuator to linear motion of a plug. Typically, the gearbox is in the fluid flow path and, thus, requires numerous seals to prevent process fluid from entering the gearbox. Operating axial fluid valves with such a large number of moving parts requiring numerous seals greatly increases the possibility of leakage of fluid outside the valve body and increases manufacturing and maintenance costs.

US 2012/138836 describes a valve body provided with a diaphragm and which operates so as to open/close a flow path.

DE 3404219 describes a valve in which the single components are easy accessible.

EP 2336610 describes a fluid transfer device and a system embodying the fluid transfer device, in particular for use in the pharmaceutical and biopharmaceutical industries.

US 2010/187462 describes a generic axial flow valve having an internal actuator.

US 2011/198523 describes a known valve having metering relief.

### SUMMARY

An example apparatus includes an axial valve body defining a passageway between an inlet and an outlet. The example apparatus includes a plug linkage assembly movable relative to the axial valve body and along a first axis substantially aligned with the passageway. The example apparatus includes a linear actuator having a stem operatively coupled to the plug linkage assembly to move at least a portion of the plug linkage assembly along the first axis within the passageway to vary a flow of fluid through the passageway. The stem of the linear actuator moves along a second axis different than the first axis.

In another example, an apparatus described herein includes an axial valve body defining a passageway between an inlet and an outlet. A plug is slidably movable relative to the axial valve body and along a first axis substantially aligned with a fluid flow path of the passageway. A linkage bar is operatively coupled to the plug, and a longitudinal axis of the linkage bar is oriented along a second axis different than the first axis. The linkage bar is to move in a direction substantially aligned with the first axis to move the plug.

In yet another example, an apparatus includes a valve stem and a plug operatively connected to an end of the valve stem. The plug has an axis substantially aligned with the valve stem. A linkage bar is operatively connected to another end of the valve stem. A linear actuator is operatively connected to the linkage bar to move at least a portion of the linkage bar in a direction substantially parallel to the axis of the valve stem. The plug and valve stem are disposed inside an axial valve body and substantially aligned with a fluid flow path through the axial valve body.

### BRIEF DESCRIPTION OF THE DRAWINGS

FIG. 1 illustrates a cross-sectional view of an example axial fluid control valve in accordance with the teachings of this disclosure.
FIG. 2 illustrates a perspective cross-sectional view of the example axial fluid control valve of FIG. 1.

In yet another example, an apparatus includes a valve stem and a plug operatively connected to an end of the valve stem. The plug has an axis substantially aligned with the valve stem. A linkage bar is operatively connected to another end of the valve stem. A linear actuator is operatively connected to the linkage bar to move at least a portion of the linkage bar in a direction substantially parallel to the axis of the valve stem. The plug and valve stem are disposed inside an axial valve body and substantially aligned with a fluid flow path through the axial valve body.

### BRIEF DESCRIPTION OF THE DRAWINGS

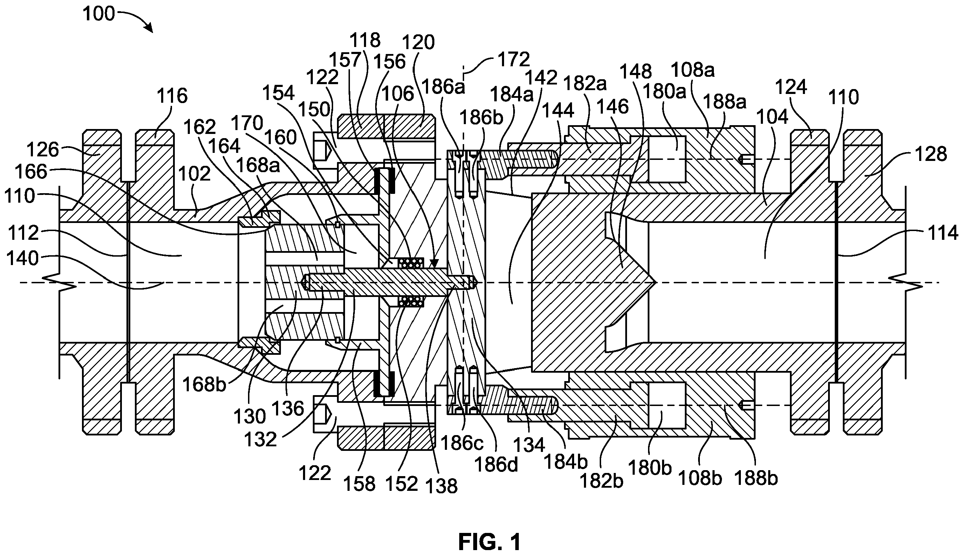

FIG. 1 illustrates a cross-sectional view of an example axial fluid control valve in accordance with the teachings of this disclosure.

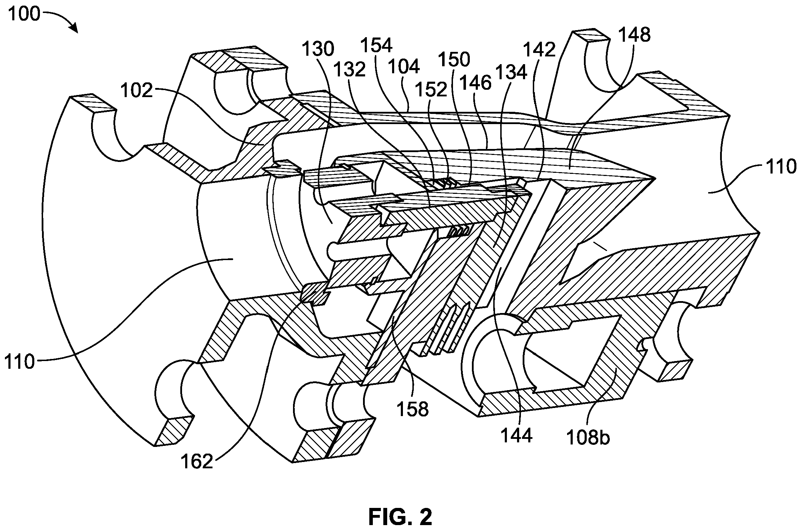

FIG. 2 illustrates a perspective cross-sectional view of the example axial fluid control valve of FIG. 1.

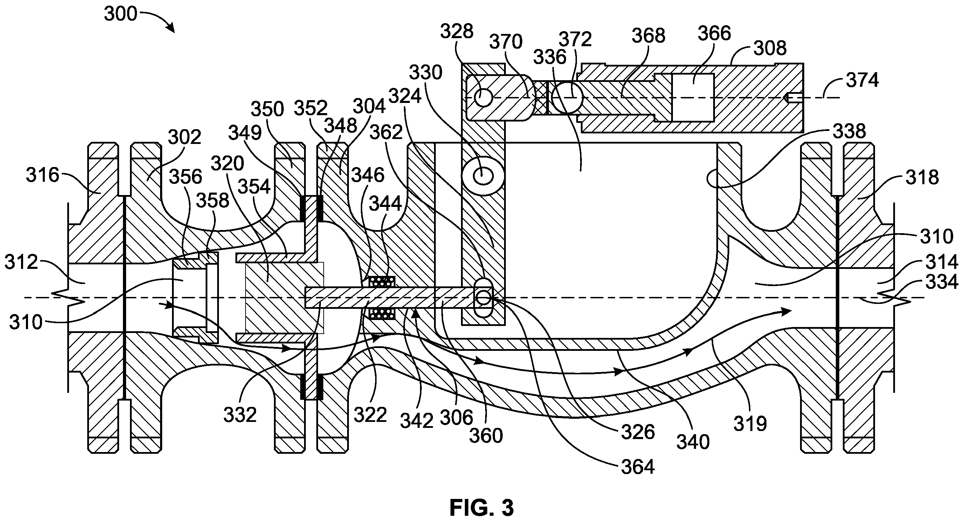

FIG. 3 illustrates a cross-sectional view of an alternative example axial fluid control valve with a single linear actuator and rocker linkage bar.

### DETAILED DESCRIPTION

Certain examples are shown in the above-identified figures and described in detail below. In describing these examples, like or identical reference numbers are used to identify the same or similar elements. The figures are not necessarily to scale and certain features and certain views of the figures may be shown exaggerated in scale or in schematic for clarity and/or conciseness. Additionally, several examples have been described throughout this specification. Any features from any example may be included with, a replacement for, or otherwise combined with other features from other examples.

The example axial fluid valves described herein reduce valve noise, provide an axially aligned passageway to reduce turbulent fluid flow and improve flow capacity, reduce the overall dimensions required to accommodate an axial valve within a piping system, significantly eliminate in-flow actuating components, which require numerous seals and gaskets, and increase flow efficiency to enable the use of smaller pumps and piping. In general, the example axial fluid valves described herein enable the use of globe valve style trim (e.g., a plug and seat ring) operatively coupled to one or more linear actuators (e.g., pneumatic actuators, hydraulic actuators, electric actuators) via a plug linkage assembly. A portion of the plug linkage assembly extends into or through a bore in the valve body in a manner that reduces or eliminates potential leakage paths commonly found in many known axial fluid valves.

One example axial fluid valve described herein includes a linear actuator offset and fluidly isolated from a fluid flow path of the valve and operatively coupled (e.g., connected) to a plug linkage assembly (e.g., a stem and a linkage bar). A portion of the plug linkage assembly (e.g., the linkage bar) is slidably moveable within a bore or opening that extends into or through a body of the valve and which fluidly isolates the plug linkage assembly from the fluid flow path. At least a portion of the plug linkage assembly is axially aligned with the fluid flow path, which greatly increases flow efficiency by reducing restrictions and, thus, turbulent flow through a passageway of the valve.

More specifically, in the example axial fluid valves described herein, an axial valve body includes a bore or opening that extends into or through the valve body. This bore or opening is fluidly isolated from a fluid passageway within the axial valve and is adapted to receive a linkage bar (e.g., a connecting rod, a rocker bar, etc.) that transfers linear motion of an actuator stem to a stem of a plug within the axial valve. The linkage bar may be operatively connected to a stem of at least one linear actuator disposed outside the fluid passageway of valve body and is also connected to the plug stem through an aperture intersecting the bore or opening. The plug stem is sealed to the aperture via a packing.

The example valve body enables the linkage bar to pass through and remain isolated from the pressure boundary by directing the flow of fluid around the bore or opening and, thus, the linkage bar, within the fluid passageway of the valve body. In operation, the linkage bar transfers linear motion from the stem of a linear actuator that moves along an axis different than the axis along which the valve trim components move within the passageway of the valve body. For example, the axes along which the stem of the plug and the stem of the linear actuator move may be parallel but offset (i.e., non-coaxial).

The examples described herein enable a relatively large portion of the moving components of an axial fluid valve to be disposed outside the fluid flow path or stream, thereby significantly reducing the number of seals and gaskets required. Further, the example axial fluid valves described herein reduce leakage caused by seal failures because the actuator(s) may be disposed outside the fluid stream. The example axial fluid valves described herein also reduce the overall dimensions required to accommodate the plug linkage assembly within a piping system, thereby allowing the example axial fluid valves to be used with smaller pumps and piping.

In the example axial fluid valves described herein, because the valve body is configured to allow the linkage bar to pass into or through the valve body without being exposed to the pressure boundary within the fluid passageway of the valve body, a single packing and gasket may be used to separate the linkage bar and actuator(s) from the process fluid. The axial valve body and plug linkage assembly described herein significantly reduce the number of moving parts required to operate an axial fluid valve. Therefore, the plug assembly and external linear actuator(s) greatly simplify the manufacturing and machining requirements and, thus, decrease the cost of manufacturing an axial fluid valve. Furthermore, by having fewer moving parts, the example axial fluid valves described herein greatly reduce the possibility of mechanical failure and leakage during operations.

FIG. 1 illustrates a cross-sectional view of an example axial fluid control valve 100 described herein. The axial fluid control valve 100 includes a first valve body portion 102, a second valve body portion 104, a plug linkage assembly 106 and first and second linear actuators 108a and 108b. The valve body portions 102 and 104 are coupled to define a passageway 110 that provides a fluid flow path between an inlet 112 and an outlet 114 when the axial fluid control valve 100 is installed in a fluid process system (e.g., a distribution piping system). In some examples, the first valve body portion 102 and the second valve body portion 104 may be integrally formed to define the axial fluid control valve 100 as a substantially unitary piece or structure.

The first valve body portion 102 includes a first flange 116 at the inlet 112 and a second flange 118 removably coupled to a third flange 120 of the second valve body portion 104. The second flange 118 of the first valve body portion 102 and the third flange 120 of the second valve body portion 104 are coupled via flange fasteners 122 (e.g., bolts). In other examples, the second flange 118 and the third flange 120 may be removably coupled with any other suitable fastening mechanism(s). The second valve body portion 104 also includes a fourth flange 124 at the outlet 114. In operation, the first flange 116 of the first valve body portion 102 may be coupled to an upstream pipe 126 and the fourth flange 124 of the second valve body portion 104 may be coupled to a downstream pipe 128.

In the example shown in FIG. 1, the axial fluid control valve 100 is in a first (closed) position. The axial fluid control valve 100 is interposed in a fluid flow path between an upstream supply source via the upstream pipe 126 and a downstream supply source via the downstream pipe 128. The process fluid may include any process fluid such as, for example, natural gas. In operation, the plug linkage assembly 106 operates between the first position to prevent the flow of fluid between the inlet 112 and the outlet 114 (e.g., the closed position) and a second position to allow fluid flow between the inlet 112 and the outlet 114 (e.g., an open position, not shown).

In the example axial fluid control valve 100 shown in FIG. 1, the plug linkage assembly 106 comprises a plug 130, a plug stem 132 and a linkage bar 134. As shown in the example, the plug stem 132 is coupled to the plug 130 at a first end 136 and coupled to the linkage bar 134 at a second end 138. In some examples, the plug stem 132 may be integrally formed with the plug 130 as a substantially unitary piece or structure. In the example shown, the plug 130 and a portion of the plug stem 132 are disposed within the passageway 110 such that their longitudinal axes are substantially axially aligned (i.e., coaxial) or substantially parallel to a longitudinal axis 140 of the passageway 110 and fluid flow therethrough.

In this example, the second valve body portion 104 comprises a bore 142 that extends through the second valve body portion 104 in a direction substantially perpendicular to the passageway 110. The bore 142 has an inner wall surface 144 and an outer wall surface 146. The inner wall surface 144 of the bore 142 is fluidly isolated from the process fluid within the passageway 110. The process fluid flows through the passageway 110 and around the outer wall surface 146 of the bore 142. The bore 142 extends through the second valve body portion 104 and is sized to receive the linkage bar 134 and enable translation of the linkage bar 134 along the longitudinal axis 140 as described in more detail below.

As more clearly shown in FIG. 2, the bore 142 is fluidly isolated from the passageway 110 by the outer wall surface 146. Thus, the passageway 110 diverts to either side of the bore 142 within the axial fluid control valve 100 and the bore 142 is exposed to the atmosphere outside the axial fluid control valve 100. In the present example, the bore 142 is rectangular, but in other examples the bore 142 may be circular, elliptical, semi-elliptical, or any other shape capable of receiving the linkage bar 134.

The outer wall surface 146 of the bore 142 may be shaped to reduce friction and, thus, turbulence within the passageway 110 of the axial fluid control valve 100. As shown in FIGS. 1 and 2, the second valve body portion 104 also includes a conical protrusion or cone 148 extending away from the outer wall surface 146 of the bore 142. The cone 148 is shaped to reduce or minimize turbulence and, thus, increases flow efficiency and decreases energy loss due to turbulence and noise. In some examples, the cone 148 may be integrally formed with the second valve body portion 104 as a substantially unitary piece or structure.

In the example shown in FIGS. 1 and 2, the plug stem 132 extends through an aperture 150 in the bore 142. The aperture 150 includes a packing 152 to maintain a seal between the passageway 110 and the bore 142 and enables a smooth, linear movement of the plug stem 132. The packing 152 is held in place by a gland nut 154, which may compress the packing 152 to form a watertight seal and prevent leakage of process fluid from the passageway 110 to the bore 142.

In this example, the axial fluid control valve 100 further comprises gaskets (e.g., seals) 156 and 157 and a cage 158. The gaskets 156 and 157 are disposed on either side of the cage 158 between the second flange 118 of the first valve body portion 102 and the third flange 120 of the second valve body portion 104. The cage 158 extends outward and is axially aligned within the fluid flow path in the passageway 110. The plug 130 is slidable within the cage 158 and is sized to fit closely within the cage 158. In the example shown, a compression ring 160 is engaged between the plug 130 and the cage 158.

A seat ring 162 is operatively connected to an inside surface of the first valve body portion 102 adjacent the inlet 112. The seat ring 162 includes a flanged portion 164 to receive a tapered surface 166 of the plug 130. In operation, the plug 130 is moved in a first direction toward the seat ring 162 to restrict or prevent the flow of fluid through the first and second valve body portions 102 and 104 and in a second direction away from the seat ring 162 to allow or increase the flow of fluid through the first and second valve body portions 102 and 104.

The plug 130 is a flow control member having holes 168a and 168b to balance pressure between the fluid stream within the passageway 110 and the area behind the plug 130 in a cage cavity 170. In other examples, the plug 130 may contain more or less than two holes to balance the pressure behind the plug 130 in the cage cavity 170. In still other examples, the plug 130 may be any other flow control member such as an unbalanced plug.

To move the plug linkage assembly 106 between the first position and the second position, the linkage bar 134 is operatively connected to the first linear actuator 108a and the second linear actuator 108b. The linkage bar 134 is oriented along a longitudinal axis 172 and is disposed within and extends through the bore 142. In the example shown, the linkage bar 134 is outside the pressure boundary of the passageway 110.

In this example, the first and second linear actuators 108a and 108b are pneumatic (operated by pressurized gas). Pneumatic actuators may be advantageous in applications involving a volatile process fluid such as, for example, natural gas. However, in other examples, the first and second linear actuators 108a and 108b may be any type of linear actuator such as, for example, a hydraulic actuator, an electric actuator, a mechanical actuator, an electro-mechanical actuator, a piezoelectroic actuator or any other suitable actuator or drive member.

In the example axial fluid control valve 100 shown, the linear actuators 108a and 108b include respective pressurized cylinders 180a and 180b and actuator stems 182a and 182b. The actuator stems 182a and 182b are coupled to the linkage bar 134 via adapters 184a and 184b at distal ends of the linkage bar 134. In the example shown, the adapters 184a and 184b are removably coupled to the linkage bar 134 by fasteners 186a-d (e.g., bolts). In other examples, the adapters 184a and 184b may be removably coupled to the linkage bar 134 with any other suitable fastening mechanism(s). In still other examples, the stems 182a and 182b may be removably coupled directly to the linkage bar 134 without the adapters 184a and 184b.

During operation, compressed gas fills the pressurized cylinders 180a and 180b to force the stems 182a and 182b toward the seat ring 162. The linear actuators 108a and 108b are oriented along axes 188a and 188b that are substantially parallel to the passageway axis 140 but offset (i.e., non-coaxial) relative to the passageway axis 140. The stems 182a and 182b move the linkage bar 134 linearly along an axis substantially aligned with the passageway axis 140. In the present example, the linkage bar 134 operates as a connecting rod and moves the plug stem 132 and, thus, the plug 130 toward or away from the seat ring 162 to vary fluid flow through the passageway 110 between the inlet 112 and the outlet 114.

The example first valve body portion 102, second valve body portion 104 and/or the plug linkage assembly 106 may be made of any suitable material such as, for example, cast iron, carbon steel, corrosion resistant materials such as, for example, stainless steel, high nickel steel, etc., and/or any other suitable material(s), or a combination thereof.

FIG. 3 illustrates a cross-sectional view of an alternative example axial fluid control valve 300. The axial fluid control valve 300 includes a first valve body portion 302, a second valve body portion 304, a plug linkage assembly 306, and a linear actuator 308. The first valve body portion 302 and the second valve body portion 304 are coupled to define a passageway 310 that provides a fluid flow path between an inlet 312 and an outlet 314 when the axial fluid control valve 300 is installed in a fluid process system (e.g., a distribution piping system).

In the example shown, the axial fluid control valve 300 is in a second position (e.g., open). The axial fluid control valve 300 may be interposed in a fluid flow path between an upstream supply source via an upstream pipe 316 and a downstream supply source via the downstream pipe 318. In operation, the plug linkage assembly 306 operates between a first position to prevent a flow of fluid 319 between the inlet 312 and the outlet 314 (e.g., a closed position, not shown) and a second position to allow the flow of fluid 319 between the inlet 312 and the outlet 314 (e.g., an open position).

The example plug linkage assembly 306 comprises a plug 320, a stem 322, a linkage bar 324, a pin-in-slot joint 326, a joint 328 and a pivot or fulcrum 330. As shown in the example, the stem 322 is coupled to the plug 320 at a first end 332. The plug 320 and a portion of the stem 322 are disposed within the passageway 310 such that their longitudinal axes are substantially axially aligned (i.e., coaxial) or substantially parallel to a longitudinal axis 334 of the passageway 310 and fluid flow therethrough.

In this example, the second valve body portion 304 comprises a cavity 336, which extends into the second valve body portion 304. The cavity 336 receives the linkage bar 324, the pin-in-slot joint 326 and the fulcrum 330. The fulcrum 330 is a pivotal joint coupled to an inner wall 338 of the cavity 336.

The cavity 336 is fluidly isolated from the passageway 310 by an outer wall 340 of the cavity 336. The passageway 310 diverts around either side of and underneath the cavity 336, and the inside of the cavity 336 is exposed to the atmosphere outside the axial fluid control valve 300.

The stem 322 traverses through an aperture 342 in the wall of the cavity 336. The aperture 342 includes packing 344 to maintain a seal between process fluid within the passageway 310 and the cavity 336. The packing 344 is held in place by a gland nut 346 to compress the packing 344 to form a watertight seal and prevent leakage of process fluid from the passageway 310 to the cavity 336.

In the example shown, the axial fluid control valve 300 further comprises gaskets (e.g., seals) 348 and 349 and a cage 354. The gaskets 348 and 349 are disposed on either side of the cage 354 between a second flange 350 of the first valve body portion 302 and a third flange 352 of the second valve body portion 304. The cage 354 extends axially within the fluid flow path in the passageway 310. A seat ring 356 is operatively connected to an inside surface of the first valve body portion 302 adjacent the inlet 312. The seat ring 356 includes a flanged portion 358 to receive the plug 320. In operation, the plug 320 is moved in a first direction toward the seat ring 356 to restrict or prevent the flow of fluid through the first and second valve body portions 302 and 304 and in a second direction away from the seat ring 356 to allow or increase the flow of fluid through the valve body portions 302 and 304.

A second end 360 of the stem 322 is pivotally and slidably attached to an end of the linkage bar 324 by the pin-in-slot joint 326 (e.g., a half joint). In the example shown, the linkage bar 324 contains a slot 362 within which the linkage bar 324 and the stem 322 are connected by a pin 364 (e.g., peg, knob, etc.). The linkage bar 324 is pivotally attached to the inner wall 338 of the cavity 336 by the fulcrum 330.

To move the plug linkage assembly 306 between the first position (closed) and the second position (open), the linkage bar 324 is pivotally connected to the linear actuator 308 by the joint 328. In the example shown, the actuator 308 includes a pressurized cylinder 366 and an actuator stem 368. The actuator stem 368 is pivotally coupled to an intermediate bar 370 by a hinge 372, and the intermediate bar 370 is pivotally coupled to the linkage bar 324 by the joint 328. In other examples, the actuator stem 368 and the linkage bar 324 may be slidably and pivotally attached by any other suitable mechanism(s).

In the example shown, during operation, compressed gas fills the pressurized cylinder 366 to force the actuator stem 368 in an outward direction (i.e., toward the seat ring 356). The linear actuator 308 is oriented along an axis 374, which is substantially parallel to the passageway axis 334 but offset (i.e., non-coaxial) relative to the passageway axis 334. The actuator stem 368, via the intermediate bar 370, moves the linkage bar 324, which pivots about the fulcrum 330 within the cavity 336. Consequently, the linkage bar 324 moves the stem 322 and the plug 320 away from the seat ring 356 to open the passageway 310 and allow the flow of fluid through the valve body from the inlet 312 to the outlet 314. In the present example, the linkage bar 324 acts as a lever or rocker, which transfers linear motion from the actuator 308 to linear motion in the plug 320.

The example axial fluid control valves 100 and 300 described herein advantageously reduce the overall dimensions required to accommodate an axial valve, significantly reduce the number of in-flow actuating components, which require extensive seals and gaskets, and increase flow efficiency. The example axial fluid control valves 100 and 300 also reduce unwanted leakage because the actuation components are disposed outside the pressure boundary of the fluid stream. Additionally, the example axial fluid control valves 100 and 300 include significantly fewer moving parts, which greatly reduce the costs of manufacturing and maintenance. The example valves described herein also include axially aligned passageways between the inlets and the outlets to provide a minimally restrictive flow path through the valves.

Although certain example apparatus have been described herein, the scope of coverage of this patent is not limited thereto. On the contrary, this patent covers all methods, apparatus, and articles of manufacture fairly falling within the scope of the appended claims either literally or under the doctrine of equivalents.

## Claims

1. An axial fluid control valve (100, 300) comprising:
an axial valve body (102, 104) defining a passageway (110) for a flow of process fluid (319) between an inlet (112) and an outlet (114), and further defining a bore (142) extending into the axial valve body (104), the bore (142) being fluidly isolated from the passageway (110);
a plug linkage assembly (106) movable relative to the axial valve body (102, 104) and along a first axis (140) substantially aligned with the passageway (110), the plug linkage assembly (106) including a plug (130), a plug stem (132), and a linkage bar (134), wherein the plug stem (132) is coupled to the plug (130) at a first end (136) of the plug stem and coupled to the linkage bar (134) at a second end (138) of the plug stem; and
a linear actuator (108a) having a stem (182a) operatively coupled to the linkage bar (134) of the plug linkage assembly (106) to move the plug (130) of the plug linkage assembly (106) along the first axis (140) within the passageway (110) to vary a flow of fluid through the passageway (110), wherein the stem (182a) of the linear actuator (108a) moves along a second axis (188a) different than the first axis (140), wherein the plug stem (132) extends through an aperture (150) in the bore (142), and the aperture (150) includes a packing (152) to maintain a seal between the passageway (110) and the bore (142) and enables a smooth, linear movement of the plug stem (132).

2. The axial fluid control valve (100, 300) as defined in any one of the previous claims, wherein the bore (142) has an inner wall surface (144) and an outer wall surface (146), the inner wall surface (144) of the bore (142) is fluidly isolated from the process fluid within the passageway (110) by the outer wall surface (146), and the passageway (110) diverts to either side of the bore (142), and the process fluid flows through the passageway (110) and around the outer wall surface (146) of the bore (142).

3. The axial fluid control valve (100, 300) as defined in claim 1 wherein at least a portion of the linkage bar (134) of the plug linkage assembly (106) is disposed and is to move within the bore (142) in the axial valve body (104).

4. The axial fluid control valve (100, 300) as defined in any one of the previous claims, wherein the bore (142) is exposed to the atmosphere outside the axial fluid control valve (100).

5. The axial fluid control valve (100, 300) as defined in any one of the previous claims, wherein the linkage bar (134) is isolated from a pressure boundary of the passageway (110).

6. The axial fluid control valve (100, 300) as defined in any of the preceding claims, wherein the linkage bar (134) has a longitudinal axis (172) oriented along a third axis different than the first axis (140), and wherein the linkage bar (134) is to move in a direction substantially aligned with the first axis (140) to move a plug (130).

7. The axial fluid control valve (300) as defined in any of the preceding claims, wherein the linkage bar (334) is pivotally attached to a fulcrum (330) fixed to the axial valve body (302, 304).

8. The axial fluid control valve (100, 300) as defined in any of the preceding claims, wherein the linear actuator (108a) is fixed to an outer surface of the axial valve body (104).

9. The axial fluid control valve (100, 300) as defined in any of the preceding claims, wherein the axial valve body (104) comprises an integrally molded housing to receive the linear actuator (108a).

10. The axial fluid control valve (100, 300) as defined in any of the preceding claims, wherein the first axis (140) and the second axis (188b) are substantially parallel.

11. The axial fluid control valve (100, 300) as defined in any of the preceding claims, wherein the axial valve body (102, 104) comprises a unitary structure between the inlet and the outlet.

12. The axial fluid control valve (100) as defined in any of the preceding claims, further comprising a second linear actuator (108b) operatively coupled to the plug linkage assembly (106).

13. The axial fluid control valve (100, 300) as defined in any of the preceding claims, wherein the axial valve body (102, 104) comprises a seat and the linear actuator (108a) is to move the plug linkage assembly (106) toward the seat (162) to prevent the flow of fluid between the inlet (112) and the outlet (114) and away from the seat to allow the flow of fluid between the (112) inlet and the outlet (114).

14. The axial fluid control valve (100, 300) as defined in any of the preceding claims, further comprising a cage (158) coupled to the axial valve body (102, 104) and substantially aligned along the first axis (140) to receive at least a portion of the plug (130) of the plug linkage assembly (106).

15. The axial fluid control valve (100, 300) of any one of the previous claims, wherein the packing (152) is held in place by a gland nut (154), which compresses the packing (152) to form a watertight seal and prevent leakage of the process fluid from the passageway (110) to the bore (142).

## Patentansprüche

1. Ein Axial-Fluid-Steuerventil (100, 300), aufweisend:
einen axialen Ventilkörper (102, 104), der einen Durchgang (110) für einen Fluss von Prozessfluid (319) zwischen einem Einlass (112) und einem Auslass (114) definiert und ferner eine Bohrung (142) definiert, die sich in den axialen Ventilkörper (104) erstreckt, wobei die Bohrung (142) von dem Durchgang (110) fluidisch getrennt ist,
eine Stopfen-Verbindungsbaugruppe (106), die relativ zu dem axialen Ventilkörper (102, 104) und entlang einer ersten Achse (140) bewegbar ist, die zu dem Durchgang (110) im Wesentlichen axial ausgerichtet ist, wobei die Stopfen-Verbindungsbaugruppe (106) aufweist einen Stopfen (130), einen Stopfenschaft (132) und eine Verbindungsstange (134), wobei der Stopfenschaft (132) an den Stopfen (130) an einem ersten Ende (136) des Stopfenschafts gekuppelt ist und an die Verbindungsstange (134) an einem zweiten Ende (138) des Stopfenschafts gekuppelt ist, und
einen Linearaktuator (108a), der einen Schaft (182a) hat, der an der Verbindungsstange (134) der Stopfen-Verbindungsbaugruppe (106) wirkgekuppelt ist, um den Stopfen (130) der Stopfen-Verbindungsbaugruppe (106) entlang der ersten Achse (140) innerhalb des Durchgangs (110) zu bewegen, um einen Fluss von Fluid durch den Durchgang (110) hindurch zu variieren, wobei sich der Schaft (182a) des Linearaktuators (108a) entlang einer zweiten Achse (188a) bewegt, die von der ersten Achse (140) verschieden ist,
wobei der Stopfenschaft (132) sich durch eine Öffnung (150) in der Bohrung (142) hindurch erstreckt und die Öffnung (150) eine Dichtpackung (152) aufweist, um eine Abdichtung zwischen dem Durchgang (110) und der Bohrung (142) aufrechtzuerhalten, und eine leichtgängige, lineare Bewegung des Stopfenschafts (132) ermöglicht.

2. Das Axial-Fluid-Steuerventil (100, 300) wie in irgendeinem der vorherigen Ansprüche definiert, wobei die Bohrung (142) eine innere Wandfläche (144) und eine äußere Wandfläche (146) hat, wobei die innere Wandfläche (144) der Bohrung (142) von dem Prozessfluid innerhalb des Durchgangs (110) durch die äußere Wandfläche (146) fluidisch getrennt ist, und der Durchgang (110) zweigt zu jeder Seite der Bohrung (142) ab und das Prozessfluid strömt durch den Durchgang (110) hindurch und um die äußere Wandfläche (146) der Bohrung (142) herum.

3. Das Axial-Fluid-Steuerventil (100, 300) wie in Anspruch 1 definiert, wobei mindestens ein Abschnitt der Verbindungsstange (134) der Stopfen-Verbindungsbaugruppe (106) angeordnet ist und innerhalb der Bohrung (142) in dem axialen Ventilkörper (104) zu bewegen ist.

4. Das Axial-Fluid-Steuerventil (100, 300) wie in irgendeinem der vorherigen Ansprüche definiert, wobei die Bohrung (142) der Atmosphäre außerhalb des Axial-Fluid-Steuerventils (100) ausgesetzt ist.

5. Das Axial-Fluid-Steuerventil (100, 300) wie in irgendeinem der vorherigen Ansprüche definiert, wobei die Verbindungsstange (134) von einem Druckeinschluss des Durchgangs (110) getrennt ist.

6. Das Axial-Fluid-Steuerventil (100, 300) wie in irgendeinem der vorangegangenen Ansprüche definiert, wobei die Verbindungsstange (134) eine Längsachse (172) hat, die entlang einer dritten Achse orientiert ist, die von der ersten Achse (140) verschieden ist, und wobei die Verbindungsstange (134) in eine Richtung zu bewegen ist, die mit der ersten Achse (140) im Wesentlichen axial ausgerichtet ist, um einen Stopfen (130) zu bewegen.

7. Das Axial-Fluid-Steuerventil (300) wie in irgendeinem der vorangegangenen Ansprüche definiert, wobei die Verbindungsstange (334) an einem Drehpunkt (330), der an dem axialen Ventilkörper (302, 304) fixiert ist, schwenkbar befestigt ist.

8. Das Axial-Fluid-Steuerventil (100, 300) wie in irgendeinem der vorangegangenen Ansprüche definiert, wobei der Linearaktuator (108a) an einer äußeren Fläche des axialen Ventilkörpers (104) fixiert ist.

9. Das Axial-Fluid-Steuerventil (100, 300) wie in irgendeinem der vorangegangenen Ansprüche definiert, wobei der axiale Ventilkörper (104) ein integral geformtes Gehäuse aufweist, um den Linearaktuator (108a) aufzunehmen.

10. Das Axial-Fluid-Steuerventil (100, 300) wie in irgendeinem der vorangegangenen Ansprüche definiert, wobei die erste Achse (140) und die zweite Achse (188b) im Wesentlichen parallel sind.

11. Das Axial-Fluid-Steuerventil (100, 300) wie in irgendeinem der vorangegangenen Ansprüche definiert, wobei der axiale Ventilkörper (102, 104) eine einheitliche Struktur zwischen dem Einlass und dem Auslass aufweist.

12. Das Axial-Fluid-Steuerventil (100) wie in irgendeinem der vorangegangenen Ansprüche definiert, ferner aufweisend einen zweiten Linearaktuator (108b), der mit der Stopfen-Verbindungsbaugruppe (106) wirkgekuppelt ist.

13. Das Axial-Fluid-Steuerventil (100, 300) wie in irgendeinem der vorangegangenen Ansprüche definiert, wobei der axiale Ventilkörper (102, 104) einen Sitz aufweist und der Linearaktuator (108a) die Stopfen-Verbindungsbaugruppe (106) zu bewegen hat in Richtung zu dem Sitz (162), um den Fluss von Fluid zwischen dem Einlass (112) und dem Auslass (114) zu verhindern, und weg von dem Sitz, um den Fluss von Fluid zwischen dem Einlass (112) und dem Auslass (114) zu ermöglichen.

14. Das Axial-Fluid-Steuerventil (100, 300) wie in irgendeinem der vorangegangenen Ansprüche definiert, ferner aufweisend einen Käfig (158), der mit dem axialen Ventilkörper (102, 104) gekuppelt ist und entlang der ersten Achse (140) im Wesentlichen axial ausgerichtet ist, um mindestens einen Abschnitt des Stopfens (130) der Stopfen-Verbindungsbaugruppe (106) aufzunehmen.

15. Das Axial-Fluid-Steuerventil (100, 300) wie in irgendeinem der vorherigen Ansprüche definiert, wobei die Dichtpackung (152) durch eine Überwurfmutter (154) in Position gehalten ist, welche die Dichtpackung (152) zusammendrückt, um eine wasserdichte Dichtung zu bilden und Ausströmen des Prozessfluids von dem Durchgang (110) zu der Bohrung (142) zu verhindern.

## Revendications

1. Vanne axiale de régulation de fluide (100, 300) comprenant :
un corps de vanne axiale (102, 104) définissant un passage (110) pour un courant de fluide de process (319) entre une entrée (112) et une sortie (114), et définissant également un alésage (142) s'étendant dans le corps de vanne axiale (104), l'alésage (142) étant isolé fluidiquement du passage (110) ;
un ensemble tringlerie d'obturateur (106) mobile par rapport au corps de vanne axiale (102, 104) et le long d'un premier axe (140) sensiblement aligné avec le passage (110), l'ensemble tringlerie de clapet (106) comprenant un obturateur (130), une tige d'obturateur (132) et une barre de tringlerie (134), dans laquelle la tige d'obturateur (132) est accouplée à l'obturateur (130) au niveau d'une première extrémité (136) de la tige d'obturateur et à la barre de tringlerie (134) au niveau d'une seconde extrémité (138) de la tige d'obturateur ; et
un actionneur linéaire (108a) avec une tige (182a) accouplée fonctionnellement à la barre de tringlerie (134) de l'ensemble tringlerie d'obturateur (106) pour déplacer l'obturateur (130) de l'ensemble tringlerie d'obturateur (106) le long du premier axe (140) dans le passage (110) afin de faire varier un débit de fluide traversant le passage (110), dans laquelle la tige (182a) de l'actionneur linéaire (108a) se déplace le long d'un deuxième axe (188a) différent du premier axe (140), dans laquelle la tige d'obturateur (132) s'étend à travers une ouverture (150) de l'alésage (142), et l'ouverture (150) comporte une ouverture d'étanchéité (152) pour maintenir l'étanchéité entre le passage (110) et l'alésage (142) et permet un mouvement souple et linéaire de la tige d'obturateur (132).

2. Vanne axiale de régulation de fluide (100, 300) selon n'importe laquelle des revendications précédentes, dans laquelle l'alésage (142) possède une surface de paroi interne (144) et une surface de paroi externe (146), la surface de paroi interne (144) de l'alésage (142) est isolée uniquement du fluide de process dans le passage (110) par la surface de paroi externe (146), et le passage (110) dévie aux deux côtés de l'alésage (142), et le fluide de process s'écoule à travers le passage (110) et autour de la surface de paroi externe (146) de l'alésage (142).

3. Vanne axiale de régulation de fluide (100, 300) selon la revendication 1, dans laquelle au moins une partie de la barre de tringlerie (134) de l'ensemble tringlerie d'obturateur (106) est située est destiné à se déplacer à l'intérieur de l'alésage (142) dans le corps de vanne axiale (104).

4. Vanne de régulation des fluide (100, 300) selon n'importe laquelle des revendications précédentes, dans laquelle l'alésage (142) exposé à l'atmosphère à l'extérieur de la vanne de régulation de fluide (100).

5. Vanne de régulation des fluide (100, 300) selon n'importe laquelle des revendications précédentes, dans laquelle la barre de tringlerie (134) est isolée d'une enveloppe sous pression du passage (110).

6. Vanne axiale de régulation de fluide (100, 300) selon n'importe laquelle des revendications précédentes, dans laquelle la barre de tringlerie (134) a un axe longitudinal (172) orienté le long d'un troisième axe différent du premier axe (140) et dans laquelle la barre de tringlerie (134) est destinée à se déplacer dans une direction sensiblement alignée avec le premier axe (140) pour déplacer un obturateur (130).

7. Vanne axiale de régulation de fluide (300) selon importe laquelle des revendications précédentes, dans laquelle la barre de tringlerie (334) est fixée de façon pivotante à un point d'appui (330) fixé au corps de vanne axiale (302, 304).

8. Vanne axiale de régulation de fluide (100, 300) selon importe laquelle des revendications précédentes, dans laquelle l'actionneur linéaire (108a) est fixée à une surface extérieure du corps de vanne axiale (104).

9. Vanne axiale de régulation de fluide (100, 300) selon n'importe laquelle des revendications précédentes, dans laquelle le corps de vanne axiale (104) comprend un logement moulé d'un seul tenant pour recevoir l'actionneur linéaire (108a).

10. Vanne axiale de régulation de fluide (100, 300) selon n'importe laquelle des revendications précédentes, dans laquelle le premier axe (140) et le deuxième axe (188b) sont sensiblement parallèles.

11. Vanne axiale de régulation de fluide (100, 300) selon n'importe laquelle des revendications précédentes, dans laquelle le corps de vanne axiale (102, 104) comprend une structure unitaire entre l'entrée et la sortie.

12. Vanne axiale de régulation de fluide (100) selon importe laquelle des revendications précédentes, comprenant également un deuxième actionneur linéaire (108b) fonctionnellement accouplé à l'ensemble tringlerie d'obturateur (106).

13. Vanne axiale de régulation de fluide (100, 300) selon n'importe laquelle des revendications précédentes, dans laquelle le corps de vanne axiale (102, 104) comprend un siège et l'actionneur linéaire (108a) est destiné à déplacer l'ensemble tringlerie d'obturateur (106) vers le siège (162) pour empêcher l'écoulement de fluide entre l'entrée (112) la sortie (114) et en direction d'éloignement du siège pour permettre l'écoulement de fluide entre l'entrée (112) et la sortie (114).

14. Vanne axiale de régulation de fluide (100, 300) selon n'importe laquelle des revendications précédentes, comprenant également une cage (158) accouplée au corps de vanne axiale (102, 104) et sensiblement alignée le long du premier axe (140) pour recevoir au moins une partie de l'obturateur (130) de l'ensemble tringlerie d'obturateur (106).

15. Vanne axiale de régulation de fluide (100, 300) selon n'importe laquelle des revendications précédentes, dans laquelle la garniture d'étanchéité (152) est maintenue en place par un presse-étoupe (154), qui comprime la garniture d'étanchéité (152) pour créer une étanchéité à l'eau et empêcher des fuites de fluide de process du passage (110) à l'alésage (142).
